# EUROPEAN PATENT APPLICATION

(11) **EP 4 656 407 A1**
(43) Date of publication of application: **03.12.2025**
(21) Application number: 25179485.5
(22) Date of filing: 28.05.2025
(51) Int. Cl.: B60B 3/00, B60B 3/08, B60B 19/12, B60B 3/12, B60B 11/10

(54) **UNIVERSAL TEMPORARY WHEEL**

(30) Priority: 31.05.2024 NL 2037835
(71) Applicant: Xinix Wheel Technology B.V., 9084 DP Goutum (NL)
(72) Inventor: Smeding, Marcel Derk, 9084 DP Goutum (NL)
(74) Representative: Arnold & Siedsma

(57) **Abstract**

The invention relates to a support wheel comprising:
- a wheel center comprising a center body that extends coaxial with a central wheel axis over a predetermined length between a first and a second end, wherein the first end is connectable to a wheel axle of a vehicle;
- a wheel body that, when viewed from the wheel axis, extends radially outwardly to a radial outer end, wherein the wheel body comprises a central opening that is configured to at least partially receive the wheel center;
- a rolling surface provided on the radial outer end of the wheel body;
wherein the wheel body comprises a central part and a lateral reinforcement disc that comprises, when viewed radially outwardly from the central wheel axis, an at least partially curved shape. The invention also relates to a method for transporting a vehicle, in particular a broken-down vehicle, using a support wheel.

## Description

The invention relates to a universal temporary wheel and a method for moving a vehicle using such a wheel.

Most modern vehicles do not carry a spare wheel, but rather a repair kit. In many cases, such repair kits are insufficient to do a road-side repair and the vehicle needs to be transported to a workshop. Similarly, in case of an accident in which the wheels are damaged, the car needs to be transported to a workshop for repairs. As a result, there exists a need for a spare wheel that can temporarily be used to move a vehicle of which the regular wheels are no longer functional. Such spare wheels can be used to move the car onto a transport and/or move the car during its stay in the workshop.

An example of such a spare wheel is found in EP 3 807 102, which discloses a universal temporary wheel comprising a wheel hub mounting plate, a wheel disc coupled to the wheel hub mounting plate, and a rim disposed on an outer perimeter of the wheel disc. To allow the wheel to be connected to a hub, the wheel hub mounting plate comprises a central bore adapted to receive an axle and a pattern of apertures adapted to receive a plurality of different lug bolt patterns of a plurality of respective wheel hubs, each aperture being positioned radially from a center of the universal temporary wheel.

A disadvantage of the abovementioned and other similar wheels is that these wheels deform and break, in particular when the wheel is subjected to loads in the transverse or axial direction. This disadvantage increases for vehicles that have a non-zero wheel camber as this increases the axial forces on the wheel. Therefore, there is a need for universal spare wheels that are capable of withstanding both the vertical and the transverse forces acting on the wheel.

The present invention is aimed at obviating or at least reducing the aforementioned problems by providing an improved universal support wheel, and in particular a support wheel comprising:
- a wheel center comprising a center body that extends coaxial with a wheel axis over a predetermined length between a first and a second end, wherein the first end is connectable to a wheel axle of a vehicle;
- a wheel body that, when viewed from the wheel axis, extends radially outwardly to a radial outer end, wherein the wheel body comprises a central opening that is configured to at least partially receive the wheel center;
- a rolling surface provided on the radial outer end of the wheel body;
wherein the wheel body comprises a central part and a lateral reinforcement disc that comprises, when viewed radially outwardly from the central wheel axis, an at least partially curved shape.

It is noted that the at least partially curved shape can also be defined as a profiled shape or, in other words, a non-flat surface, in particular a surface comprising one or more curves or bends.

An advantage of the support wheel according to the invention is that, due to the lateral reinforcement disc, it is capable of withstanding both vertical and lateral forces without bending or breaking. In other words, it provides an increased strength, in particular against lateral forces, compared to the existing support wheels.

Another advantage of the support wheel according to the invention is that the support wheel has a relatively light weight. Although it may be possible to increase the (lateral) strength of the support wheel by (further) increasing the thickness of the wheel, this would lead to a heavy and cumbersome wheel that could not be used during recovery of stranded vehicles. The lateral reinforcement disc reinforces the support wheel at the necessary places without adding unnecessary weight at other places of the support wheel. In other words, the support wheel achieves its increased lateral strength by purposefully only strengthening the support wheel at the locations that require such reinforcement.

Another advantage is that the combination of the central part and the lateral reinforcement disc is that the support wheel has a double layer structure that further increased the strength of the support wheel, both in vertical and in lateral direction. This is increased even further if the central part and lateral reinforcement disc are fixedly connected to each other, such as glued or melted together, and/or if the central part and the lateral reinforcement disc are manufactured from different (suitable) materials.

A further advantage is that the lateral reinforcement disc may also be used to cover any connectors and/or connections means that are attached to the central part and/or the wheel center to prevent these connections means from damaging vehicle parts, such as brake calipers.

In an embodiment of the support wheel according to the invention, the disc surface comprises a central opening that is delineated by an inner edge, wherein the central opening is configured to accommodate the first end of the wheel center.

The wheel center preferably extends over a predetermined within the lateral reinforcement disc, whereas the first end of the wheel center is connectable to the wheel axle. The central opening in the lateral reinforcement disc provides an opening through or in which the first end of the wheel center can be provided for connecting the wheel center to a vehicle axis.

In an embodiment of the support wheel according to the invention, the at least partially curved shape comprises a first curve that extends towards outwardly from the inner edge towards the central part.

An advantage of first curve is that it provides increased strength of the support wheel, especially with regard to withstanding lateral forces, due to an improved distribution of the load. Another advantage of the abovementioned first curve is that it, due to its downward slope towards the central part, provides sufficient space between a brake caliper of the vehicle and the support wheel, in particular the lateral reinforcement disc. A further advantage is that, due to the first curve, no sharp edges are present that may damage parts of the vehicle, such as a brake caliper. An even further advantage is that the first curve also provides, in some cases, a guide surface to correctly position or guide the support wheel towards the axle of a vehicle on which the support wheel needs to be positioned.

In an embodiment of the support wheel according to the invention, the at least partially curved shape comprises a curved surface that is a semi-circle that, when viewed along the wheel axis from the inner edge towards the central part, has a concave surface. It is noted that the shape of the curved surface may also be defined as a cup-shape or cup-shape surface, a bowl-shape or bowl-shaped surface or similar definitions.

An advantage of curved surface is that it provides increased strength of the support wheel, especially with regard to withstanding lateral forces, due to the fact that lateral loads are better distributed over the wheel. Another advantage of the curved shape is that it provides an increased distance between the support wheel and the components of the vehicle. A further advantage is that the lack of sharp edges reduces the risk of damage to parts of the vehicle during mounting thereof on the vehicle.

In an embodiment of the support wheel according to the invention, the at least partially curved shape comprises a curved surface that is positioned radially outwardly from the first curve and is operatively connected to an outer edge thereof, wherein the curved surface is a semi-circle that, when viewed along the wheel axis from the inner edge towards the central part, has a concave surface.

It is noted that the shape of the curved surface may also be defined as a cup-shape or cup-shape surface, a bowl-shape or bowl-shaped surface or similar definitions.

An advantage of curved surface is that it provides increased strength of the support wheel, especially with regard to withstanding lateral forces, due to the fact that lateral loads are better distributed over the wheel. Another advantage of the curved shape is that it provides an increased distance between the support wheel and the components of the vehicle. A further advantage is that the lack of sharp edges reduces the risk of damage to parts of the vehicle during mounting thereof on the vehicle.

In an embodiment of the support wheel according to the invention, the at least partially curved shape further comprises a second curve that extends outwardly from an outer edge of the curved surface towards the central part, wherein the second curve preferably is connected to a surface of the central part.

The lateral reinforcement disc preferably has a rounded outer edge as this obviates sharp edges that may damage the vehicle during mounting of the support wheel on the vehicle. Another advantage is that it provides a smooth transition between the (outer) edge of the lateral reinforcement disc and the side of the central wheel part. An advantage thereof is that the outer edge may be connected to the central wheel part along the edge, for example using a glue or by hot melting the edges together.

In an embodiment of the support wheel according to the invention, the at least partially curved shape further comprises a transition zone that connects the first curve with the curved surface, wherein the transition zone extends outwardly and, when viewed along the wheel axis from the inner edge towards the central part, away from the central part. The transition zone preferably comprises a curved transition zone.

An advantage of the transition zone, in particular a transition zone having a curve, is that it provides a transition region between the first curve and the curved surface. In addition, by its curve provides additional strength to the support wheel, in particular lateral strength.

In an embodiment of the support wheel according to the invention, the first end of the wheel center is flush with the inner edge of the lateral reinforcement disc or extends, when viewed along the central wheel axis, beyond said inner edge.

The wheel center, which is connectable to the wheel axis for mounting the support wheel on the vehicle, preferably extends (seen in an outward direction from the wheel body) beyond the inner edge of the lateral reinforcement disc. An advantage is that the wheel center can easily be connected to the wheel axis to mount the wheel. Alternatively, the wheel center, preferably the mounting surface thereof, can be positioned flush with the inner edge, which allows the wheel to be slid onto the axle with relative ease.

In order to mount the support wheel on the wheel axle of a vehicle, the wheel center must at least be flush with the inner edge. This allows the wheel center to be connected to the wheel cner using connection or mounting means.

In an embodiment of the support wheel according to the invention, the first end of the wheel center comprises a mounting surface, preferably a connection or mounting plate, that is connectable to the wheel axis, wherein the mounting surface comprises multiple apertures that are configured to receive axle bolts.

The multiple apertures allow the support wheel to be mounted on the bolts of the axle of the vehicle. It is preferred that the apertures are positioned such that both 4, 5 and preferably even 6 and 7 lug-axles can be provided with the support wheel according to the invention.

In an embodiment of the support wheel according to the invention, the apertures are shaped for receiving multiple types of bolts.

An advantage of this embodiment is that the support wheel is mountable on virtually any type of vehicle, regardless of the bolt size and/or the positioning thereof on the axle.

In an embodiment of the support wheel according to the invention, the lateral reinforcement disc is positioned on a first side of the wheel that, in use, faces the wheel axle of the vehicle.

In an embodiment of the support wheel according to the invention, the second end of the wheel center comprises a flange that, when viewed from the wheel axis, extends radially outward, wherein the flange is configured to be positioned against or at least partially in a second side wall of the wheel body that is positioned opposite the lateral reinforcement disc.

An advantage of the abovementioned flange is that it prevents the wheel body from sliding outwards, even if no (further) connection means are provided. As a result, the flange increases safety of the support wheel as the wheel body can, in a mounted position of the wheel, not be disconnected from the axle. At most, it is movable in a lateral direction.

Another advantage of the flange is that it can be provided against or even at least partially in a side wall of the wheel body. This allows the flange to either function as a connector, which can be connected to the wheel body to provide a fixed connection, or as a retainer which can be used to enclosed the wheel body between the flange and another part that is provided on the opposite side of the wheel body (or a central part thereof).

In an embodiment of the support wheel according to the invention, the flange is configured to connect the wheel body to the wheel center.

The flange can advantageously be used to connect the wheel body and the wheel center to each other to form a single support wheel unit that is connectable to the vehicle axle.

An advantage of the abovementioned flange is that it prevents the wheel body from sliding outwards. The flange can at the same time be used to connect the wheel center to the wheel body to prevent lateral movement of the wheel body relative to the wheel center. A further advantage of the flange is that it provides a strong connection surface for connecting the wheel center to the wheel body.

In an embodiment of the support wheel according to the invention, the flange of the wheel center and the wheel body both comprise openings, and the support wheel further comprises connection means that are configured to be inserted in or through the openings to connect the wheel center and the wheel body to each other.

In elaboration, the connection means comprise one of: bolts and nuts, studs or a bayonet closure.

The flange and the wheel body may for example be connected using the abovementioned connection means, which all provide a strong and reliable connection. A particular advantage of studs is that these form a solid connection, which obviates the risk of loosening. The other mentioned connection means provide the advantage that they form a disconnectable connection, which allows the various parts of the support wheel to be disassembled. This increases the sustainability of the support wheel.

In an alternative elaboration, the connecting means are screws and the openings in the wheel body comprise internal threading, wherein the screws are configured to cooperate with the internal threading to connect the wheel center and the wheel body with each other.

A threaded connection provides a strong and reliable connection, which advantageously also is disconnectable or releasable. This allows the support wheel to be disassembled in various parts that may be recycled and/or re-used. This increases the sustainability of the support wheel.

In an embodiment of the support wheel according to the invention, wherein the support wheel further may comprise a securing ring that is configured to be provided on the wheel center between the central part and the lateral reinforcement disc of the wheel body, and wherein the central part is rotatably positioned between the flange and the securing ring.

An advantage of providing the securing ring is that an independently rollable support wheel, or a 'spinner wheel' is achieved. This is achieved by virtue of the fact that the wheel body, or at least the central part thereof, is not fixedly connected to the wheel center, but is rotatable relative thereto. In other words, the wheel body is enclosed between the flange and the securing ring, but not connected thereto. As a result, the wheel body can rotate even if the axle of the vehicle is locked for rotation (hence the phrase 'spinner wheel').

This is particularly interesting with regard to the recovery and transport of electric vehicles (EV's), since the wheels of EV's are locked against rotation if the vehicle is not switched on. Using this embodiment of the support wheel according to the invention, such vehicles, as well as other vehicles having locked axles, can still be transported and/or recovered.

It is preferred that the securing ring is connected to the wheel center such that the securing ring is locked in place relative to the wheel center. This provides that the securing ring and the flange together form the enclosure for the central part of the wheel body.

An advantage of the lateral reinforcement disc, when combined with this particular embodiment, is that the connection means that are used to connect the securing ring to the wheel center are covered by the lateral reinforcement disc. This obviates the risk of damage to the vehicle, in particular the brake calipers, by the connection means associated with the securing ring.

In an embodiment of the support wheel according to the invention, the securing ring is connected to the wheel center using connection means, wherein the connection means preferably comprises bolts and/or screws that are bolted respectively screwed into the wheel center.

The securing ring is preferably connected to the wheel center by means of bolts and/or screws, of which the upper part often emanates slightly from the securing ring. It was found that these extending parts, when not covered, often cause damage to the brake caliper when the support wheel is mounted. An additional advantage of the lateral reinforcement disc is that it covers the bolts and/or screws. As a result, damage to the brake caliper is prevented and it is immediately clear to an operator whether the respective support wheel is usable on that particular vehicle.

In an embodiment of the support wheel according to the invention, the wheel body further comprises a bearing that is positioned in the central opening, such that the wheel body is rotatable relative to the wheel center.

In a preferred embodiment, the wheel body, particularly the central part thereof that is positioned around the wheel center, is provided with a bearing. This allows the wheel body to (freely) rotate relative to the wheel center regardless of the (capability of) movement of the wheel center. An advantage of a bearing is that the wear on the support wheel is reduced as the wear on the central part of the wheel body (which rotates around the wheel center) is reduced. Another advantage is that the support wheel is capable to be operated at higher movement or transport speed due to the reduced friction in the central part, thus obviating the risk of damage to an increased friction. As a result, a 'spinner wheel' for higher movement speeds is achieved.

In an embodiment of the support wheel according to the invention, the bearing comprises in inner bearing part, preferably a ring, that is operatively connected to the wheel center and an outer bearing part, preferably a ring, that is operatively connected to the wheel body.

The bearing preferably has an outer bearing ring that is fixedly connected to the central part of the wheel body and is positioned in the central opening thereof. The inner bearing ring is connected to the wheel center, which allows independent rotation of the wheel body and the wheel center. This means that, in use of the support wheel, the inner bearing ring is configured to be co-rotating with the wheel center, whereas the outer bearing ring is configured to be co-rotating with the wheel body. In other words, the inner bearing has a fixed position relative to the wheel center and is rotatable relative to the wheel body, whereas the outer bearing has a fixed position relative to the wheel body and is rotatable relative to the wheel center.

In an embodiment of the support wheel according to the invention, the central part and the lateral reinforcement disc are releasably or fixedly connected to each other.

Whether a releasable or fixed connection is provided between the central part and the lateral reinforcement disc depends on the specific needs for the support wheel. An advantage of providing a fixed connection is that it even further increases the strength of the support wheel.

An advantage of a releasable connection is that the parts can individually be replaced. In addition, any parts that may be positioned between the central part and the lateral reinforcement disc can be (only) be accessed if the parts are releasable from each other.

In an embodiment of the support wheel according to the invention, the central part and the lateral reinforcement part are glued together or are hot melted to each other.

An advantage of providing the abovementioned connection is that it even further increases the strength of the support wheel. A further advantage is that it provides an integral support wheel.

In an embodiment of the support wheel according to the invention, the central part and the lateral reinforcement part are integrally formed.

An advantage of providing the abovementioned connection is that it even further increases the strength of the support wheel. A further advantage is that any connection means to connect the central part and the lateral reinforcement disc with each other is obviated.

In an embodiment of the support wheel according to the invention, the releasable connection comprises bolts, click-connectors, or bayonet-connectors.

An advantage of providing a releasable connection is that both parts can be separated from each other, which allows maintenance to the support wheel, and in particular to the securing ring and/or the bearing if these are applied in the support wheel. Due to the fact that a 'spinner wheel' as mentioned above has moving parts, the wear on the support wheel may be higher than for a 'standard' support wheel that does not contain such a 'spinner function' (i.e. the capability of rotating despite a locked axle). Such maintenance can be (more easily) performed if both parts (central part and disc) can be separated from each other.

In an embodiment of the support wheel according to the invention, the central part comprises openings, wherein the openings are configured to reduce the weight of the support wheel.

The weight of the support wheel can advantageously be reduced by providing openings in the structure of the wheel. The openings are positioned such that the structural integrity of the cental part is not, or not significantly reduced.

In an embodiment of the support wheel according to the invention, the central part comprises openings that are configured to cooperate with click connectors of the lateral reinforcement disc and/or with openings of the lateral reinforcement disc for securing the central part and the lateral reinforcement disc to each other.

The use of click connectors and/or openings in the lateral reinforcement disc in conjunction with the openings in the central part provides an advantage in that it allows both parts to be lined up correctly before connecting them together.

In an embodiment of the support wheel according to the invention, wherein the wheel center has a substantially cylindrical or substantially conical shape.

An advantage of a cylindrical or conical shape is that it allows the wheel center to be slid into the central opening of the support wheel with relative ease. Another advantage is that the cylindrical or conical shape provides a stable and balanced surface for mounting the wheel body. The wheel center in general will have a predetermined radius, measured from a central axis.

In an embodiment of the support wheel according to the invention, wherein the wheel center comprises:
- a first part that extends over a predetermined length from the first end towards the second end, the first part having a first diameter; and
- a second part that extends over a predetermined length from the first part towards the second end, the second part having a second diameter,
wherein the second diameter is larger than the first diameter.

An advantage of the abovementioned embodiment is that the second part can be adapted to the central part of the wheel body to provide a close fit. In other words, the central part can be provided with a low amount of space between the wheel center and the central part. This may for example be in the range of several millimeters to even less. It is preferred that the wheel body is still rotatable around the wheel center.

The transition area between the (larger diameter) second part and the (smaller diameter) first part may subsequently be used to provide locking or enclosing means to (stably) position the central part of the wheel body on the wheel center.

In an embodiment of the support wheel according to the invention, the predetermined length of the second part is substantially equal to a thickness of the central part of the wheel body.

An advantage of adapting the length of the second part to the thickness of the central part of the wheel body is that wheel body can be provided on the wheel center in a substantially fitting manner. In other words, the central part can be provided with a low amount of space between the wheel center and the central part. This may for example be in the range of several millimeters to even less. It is preferred that the wheel body is still rotatable around the wheel center.

A further advantage, especially when using a securing ring, is that the securing ring can be provided on the transition between the first and the second part. Preferably, the (inner) diameter of the securing is chosen to be slightly smaller than the diameter of the second part, thus allowing the securing ring to be positioned against the second part (near the transition between the first and the second part).

In an embodiment of the support wheel according to the invention, the rolling surface is a tyre, preferably a plastic or rubber tyre, more preferably a nylon tyre.

The rolling surface preferably is a tyre of some sort or type. Preferably, the tyre is a solid tyre made of one of the abovementioned materials, which provide the advantage of being strong, durable and cost-effective to manufacture.

In an embodiment of the support wheel according to the invention, the support wheel is at least partially made of plastic, and preferably wherein the wheel body comprises plastic.

An advantage of plastic is that it provides a relatively strong material against relatively low cost compared to for example stainless steel or aluminum. A further advantage is that manufacturing (parts of) the support wheel can be realized against relatively low cost using injection moulding and/or 3D-printing manufacturing.

The invention also relates to a method for transporting a vehicle, in particular a stranded vehicle, the method comprising:
- providing a support wheel according to the invention;
- removing a wheel from a vehicle;
- attaching the support wheel to the axle of the vehicle; and
- transporting the vehicle using the support wheel.

The method for transporting a vehicle according to the invention provides similar effects and advantages as the support wheel according to the invention. The embodiments disclosed for the support wheel according to the invention may also be used, alone or in any technically feasible combination in the method for transporting a vehicle according to the invention.

In an embodiment of the method for transporting a vehicle according to the invention, the support wheel comprises a support wheel:
- having a securing ring that is configured to be provided on the wheel center between the central part and the lateral reinforcement disc of the wheel body, and wherein the central part is rotatably positioned between the flange and the securing ring; or
- comprising a bearing that is positioned in the central opening of the wheel body such that the wheel body is rotatable relative to the wheel center, and
wherein the vehicle is an electric vehicle.

An advantage of this embodiment is that the wheel body can (freely) rotate relative to the wheel center regardless of the (capability of) movement of the wheel center. This is particularly necessary with electric vehicles or EVs, since the axles of EVs are locked against movement if the EV is switched off. Therefore, a standard spare or universal support wheel will not suffice to transport an EV when it stranded (or within a workshop environment).

The invention also relates to a method for converting a universal spare wheel into a support wheel according to the invention, the method comprising:
- providing a support wheel comprising a wheel center having a flange and a wheel body;
- providing a securing ring;
- preparing and/or adapting the wheel center to provide connection means configured to connect the securing ring to the wheel center; and
- attaching the securing ring to the wheel center, therewith clamping the wheel body between the securing ring and a flange of the wheel center.

The method for converting according to the invention provides similar effects and advantages as the support wheel according to the invention. The embodiments disclosed for the support wheel according to the invention may also be used, alone or in any technically feasible combination in the method for converting according to the invention.

In an embodiment of the method for converting according to the invention, the method may additionally comprise the step of providing the wheel body with a lateral reinforcement disc according to the invention.

This step provides additional stability and strength to the support wheel and therefore is a preferred step to perform during conversion.

In an embodiment of the method for converting according to the invention, the step of preparing and/or adapting the wheel center may comprise:
- replacing the existing wheel center with a wheel center comprising:
   - a first part that extends over a predetermined length from the first end towards the second end, the first part having a first diameter; and
   - a second part that extends over a predetermined length from the first part towards the second end, the second part having a second diameter,
   wherein the second diameter is larger than the first diameter; or
may alternatively comprise the steps of:
- drilling connection openings in the existing wheel center, wherein the connection openings are positioned adjacent the wheel body on an opposite side of the flange of the wheel center; and
- preferably disconnecting the flange of the wheel center from the wheel body.

The wheel center may be either adapted to perform the function of enclosing the wheel center, or may simply be replaced with a wheel center as described for the support wheel according to the invention.

Further advantages, features and details of the invention are elucidated on the basis of preferred embodiments thereof, wherein reference is made to the accompanying drawings, in which:
Figure 1 shows a perspective view of an example of a support wheel according to the invention;
Figure 2 shows a cross-sectional view of the example along the line FIG 2 of figure 1;
Figure 3 shows an exploded view of the example of figure 1;
Figure 4 shows a cross-sectional view of a second example of a support wheel according to the invention;
Figure 5 shows an exploded view of example of figure 4;
Figure 6 shows a cross-sectional view of a third example of a support wheel according to the invention;
Figure 7 shows an exploded view of the example of figure 6; and

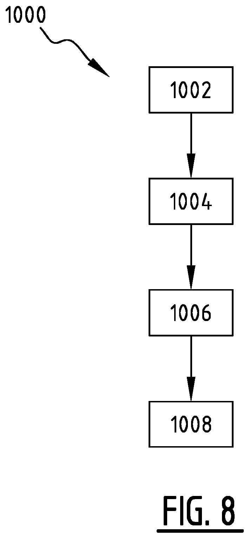

Figure 8 shows a schematic overview of an example of the method for transporting a vehicle according to the invention.

It is noted that in the figures similar features are indicated with similar reference signs. It is further noted that features and/or embodiments shown in the figures should not be considered to only be applicable with other features shown in said figures unless they are inextricably linked to each other.

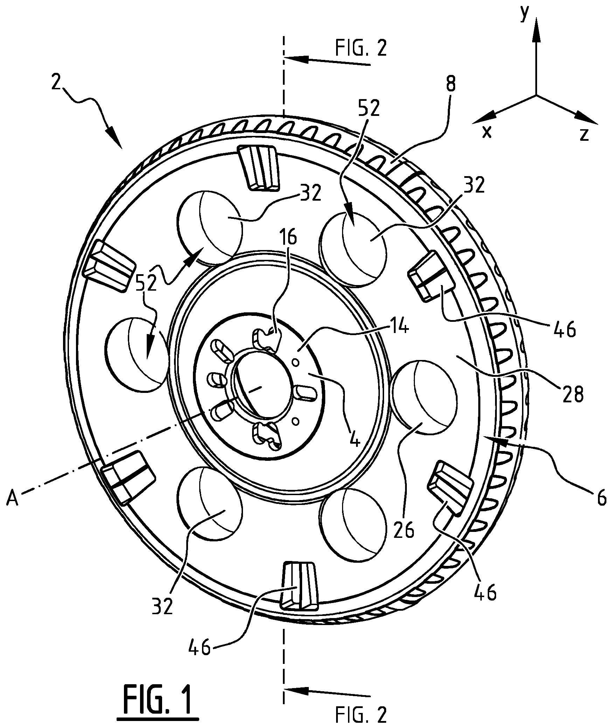

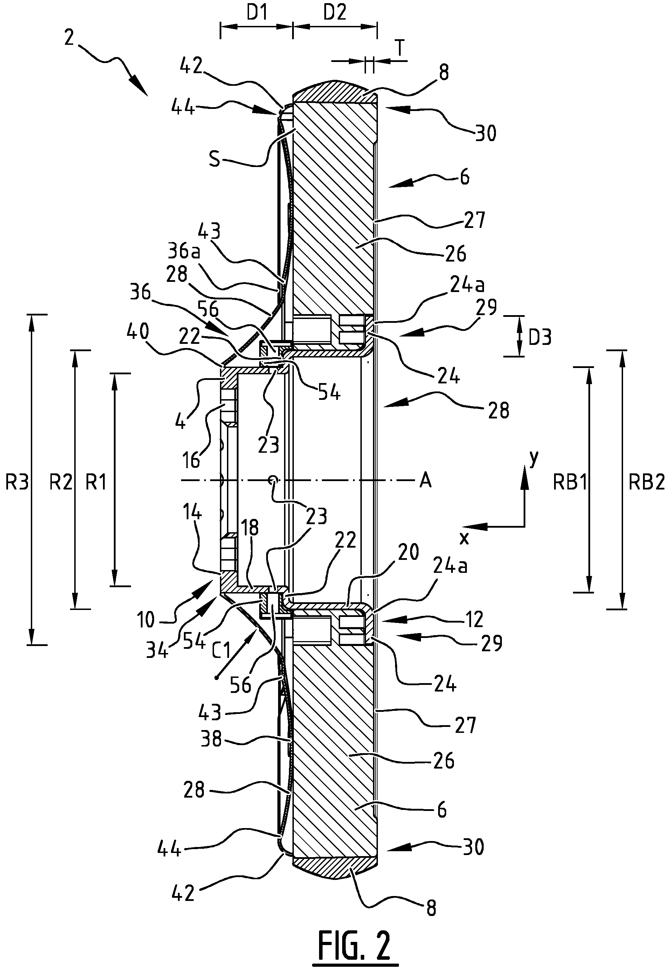

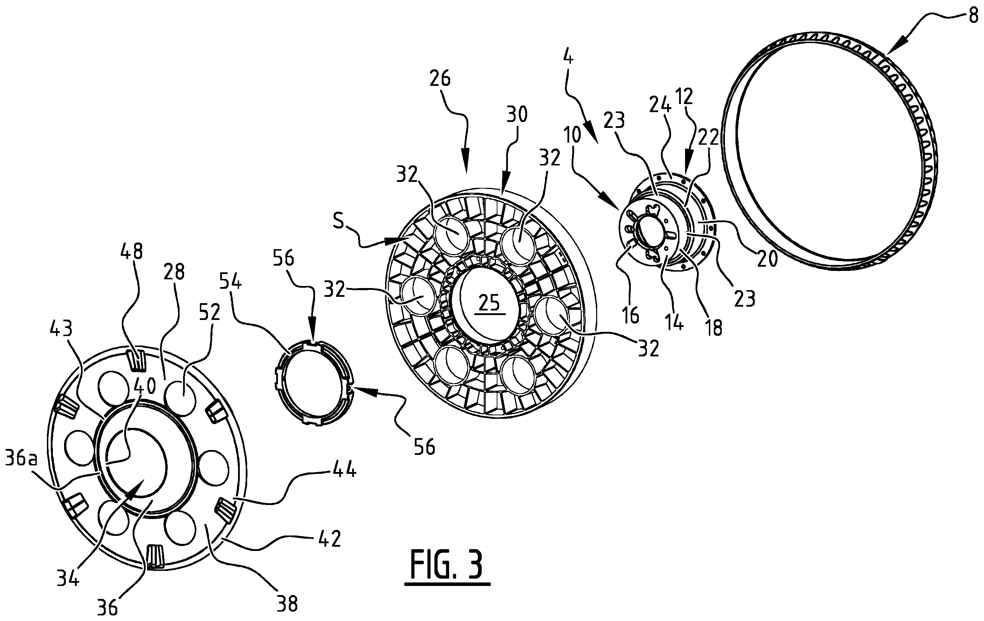

In an example (see figures 1 to 3), support wheel 2 comprises, viewed from central axis A outwards, wheel center 4, wheel body 6 and rolling surface 8. Wheel center 4 in this example comprises steel wheel center 4 having a (substantially) cylindrical shape that extends over distance D from first end 10 to second end 12. First end 10 is provided with mounting surface 14, which in this example is formed as mounting plate 14 having a plurality of apertures 16 that are configured to receive axle bolts to connect support wheel 2 to an axle of a (not shown) vehicle. Apertures 16 of mounting surface 14 are configured such that they can be used for 4 or 5-lug axles and/or for 6 and 7-lug axles of vehicles. This allows support wheel 2 to be positioned on many different types and makes of vehicles.

In this example, wheel center 4 comprises first part 18 and second part 20. First part 18 extends over length D1 from first end 10 towards second part 20 and is connected thereto. Second part 20 extends over length D2 from (the end of) first part 18 towards second end 12 of wheel center 4. First part 18 has first diameter R1 and second part 20 has second diameter R2, which is larger than first diameter R1, which results in radially outwardly directed edge 22 being formed between first part 18 and second part 20. Wheel center 4 further comprises, at second end 12, flange 24, which extends radially outward from second end 12 over distance D3, which is a difference between second diameter R2 and third diameter R3. Furthermore, wheel center 4 in this example is provided with openings 24 that are positioned in first part 18 near edge 22. In this example 'near' means within a distance of between 0.1% and 5% of distance D1. In practice, this will in most cases be a distance of a few centimeters or even as close as several millimeters. Other distances are also possible, depending on the size of wheel center 4.

Wheel body 6 in this example comprises central part 26 and lateral reinforcement disc 28. In this example, central part 26 is formed as a donut-shaped part 26 comprising nylon, although it is noted that other materials, including other plastics may also be used to manufacture central part 26. Central part 26, being donut-shaped, comprising central opening 25 having radius BR1, which is substantially equal or slightly larger than radius R2, such that wheel body 6 can slidably be provided on wheel center 4, in particular on second part 20 of wheel center 4. Central part 26 extends radially outward from central opening 25 towards radial outer end 30. In this example, central part 26 is provided with a number of openings 32, which are in this example circular in shape. It is noted that other shapes, such as polygonal or elliptical shapes are also possible. Side wall 27 of central part 26, which in use is directed outwardly, is provided with circular indentation 29 that is shaped to fittingly, preferably snugly, receive flange 24 therein. The depth of indentation 29, when viewed in first direction x along central axis A, is substantially equal to thickness T of flange 24, such that upper surface 24a of flange 24 is flush with side wall 27 of central part 26.

Lateral reinforcement disc 28 comprises a donut-shaped disc having an at least partially curved shape and central opening 34. Central opening 34 has radius RB2, which is smaller than radius RB1 and which is substantially equal or slightly larger than radius R1, such that first end 10 of wheel center 4 can slidably be provided on first end 10 of wheel center 4.

In this particular example, lateral reinforcement disc 28 comprises first curve 36 that extends outwardly from inner edge 40 of central opening 34 towards central part 26. In other words, first curve 36 is, when viewed from a mounted position of support wheel 2, outwardly directed. First curve 36 comprises a curve having a curve radius C1. The at least partially curved shape of lateral reinforcement disc 28 in this example further comprises curved surface 38 that is positioned radially outwardly from first curve 36 and that is operatively connected to outer edge 36a thereof. Curved surface 38 in this example is a semi-circle that, when viewed along wheel axis A from inner edge 40 of lateral reinforcement disc 28 towards central part 26, has a concave surface. In this example, the at least partially curved shape further comprises second curve 42 that extends outwardly from outer edge 44 of curved surface 38 towards central part 26 of wheel body 6. Second curve 42 in this example has a rounded outer edge that, at its end, is connected to surface S of central part 26. The rounded outer edge obviates sharp edges that may damage the vehicle during mounting of the support wheel on the vehicle. In addition, lateral reinforcement disc 28 in this example comprises transition zone 43, which is connects first curve 36 with curved surface 38. Transition zone 43 extends outwardly and, when viewed along wheel axis A from inner edge 40 towards central part 26, away from central part 26. Transition zone 43 in this example comprises a slight curve to further increase the strength and to provide a solid connection between first curve 36 and curved surface 38.

In this example, lateral reinforcement disc 28 is connected to central part 26 by means of releasable click-connection 46. Click connection 46 comprises click element 48 in lateral reinforcement disc 28 and opening 50 in central part 26 that is configured to matingly receive click element 48 which clicks into place. Lateral reinforcement disc 28 further comprises openings 52 that, when central part 26 and lateral reinforcement disc 28 are connected to each other, are positioned at the same position to form through-holes in wheel body 6.

Rolling surface 8 in this example comprises solid plastic, in particular nylon-containing, tyre 8, which is provided on radial outer end 30 of wheel body 6. The connection between the rolling surface 8 and wheel body 6 is preferably made by gluing, although other methods of connecting, such as hot melting, screwing or bolting may also be used.

In this example (see figures 1 to 3), support wheel 2 further comprises securing ring 54 that is positioned on wheel center 4 and between central part 26 and lateral reinforcement disc 28 of wheel body 6. More precisely, in this example securing ring 54 rests against edge 22 between first part 18 and second part 20 of wheel center 4. As such, securing ring 54 and flange 24 enclose central part 26 of wheel body therebetween such that rotation of wheel body 6 is still possible. This results in wheel body 6 of support wheel 2 being able to rotate even if wheel center 4 is connected to a non-rotating axle of a vehicle, such as an electric vehicle (EV). This allows even vehicles with locked axles to be transported in a rolling manner.

Securing ring 54 is provided with openings 56 that are configured for receiving connection means, such as bolts or screws, to (releasably) connect securing ring 54 to wheel center 4. The bolts or screws (not shown) are provided through opening 56 and subsequently respectively bolted or screwed into openings 24 which are configured to lock securing ring 54 to wheel center 4.

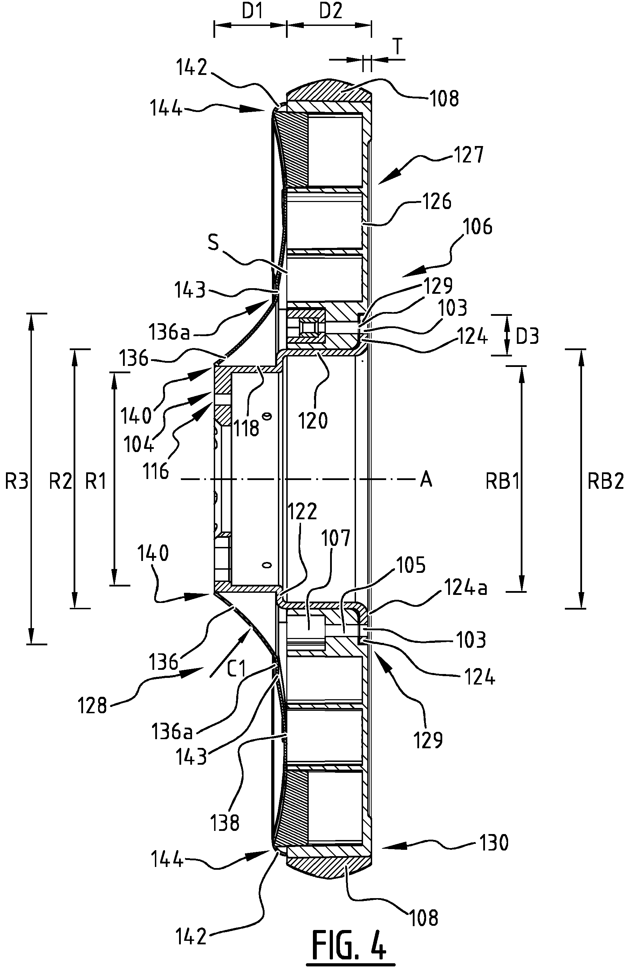

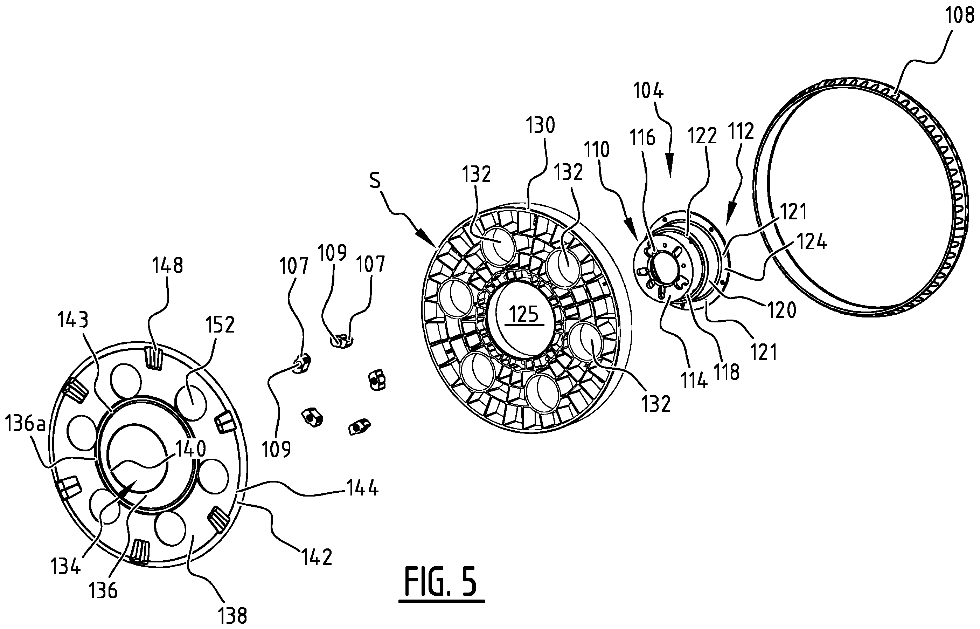

In a second example (see figures 4 and 5), support wheel 102 comprises, viewed from central axis A outwards, wheel center 104, wheel body 106 and rolling surface 108. Wheel center 104 in this example comprises steel wheel center 104 having a (substantially) cylindrical shape that extends over distance D from first end 110 to second end 112. First end 110 is provided with mounting surface 114, which in this example is formed as mounting plate 114 having a plurality of apertures 116 that are configured to receive axle bolts to connect support wheel 102 to an axle of a (not shown) vehicle. Apertures 116 of mounting surface 114 are configured such that they can be used for 4 or 5-lug axles and/or for 6 and 7-lug axles of vehicles. This allows support wheel 102 to be positioned on many different types and makes of vehicles.

In this example, wheel center 104 comprises first part 118 and second part 120. First part 118 extends over length D1 from first end 110 towards second part 120 and is connected thereto. Second part 120 extends over length D2 from (the end of) first part 118 towards second end 112 of wheel center 104. First part 118 has first diameter R1 and second part 120 has second diameter R2, which is larger than first diameter R1, which results in radially outwardly directed edge 122 being formed between first part 118 and second part 120. Wheel center 104 further comprises, at second end 112, flange 124, which extends radially outward from second end 112 over distance D3, which is a difference between second diameter R2 and third diameter R3.

Wheel body 106 in this example comprises central part 126 and lateral reinforcement disc 128. In this example, central part 126 is formed as a donut-shaped part 126 comprising nylon, although it is noted that other materials, including other plastics may also be used to manufacture central part 126. Central part 126, being donut-shaped, comprising central opening 125 having radius BR1, which is substantially equal or slightly larger than radius R2, such that wheel body 106 can slidably be provided on wheel center 104, in particular on second part 120 of wheel center 104. Central part 126 extends radially outward from central opening 125 towards radial outer end 130. In this example, central part 126 is provided with a number of openings 132, which are in this example circular in shape. It is noted that other shapes, such as polygonal or elliptical shapes are also possible. Side wall 127 of central part 126, which in use is directed outwardly, is provided with circular indentation 129 that is shaped to fittingly, preferably snugly, receive flange 124 therein. The depth of indentation 129, when viewed in first direction x along central axis A, is substantially equal to thickness T of flange 124, such that upper surface 124a of flange 124 is flush with side wall 127 of central part 126. In this example, flange 124 is connected with wheel body 106 by means of bolts 103. Bolts 103 (see figure 4) extend through openings 121 in flange 124 as well as through (matching) openings 105 in central part 106. On side of central part 106 opposite flange 124, locking elements 107 are provided, which snugly fit in openings 109 in central part 106. Bolts 103 extend through openings 121 and 105 and are bolted into opening 109 of locking element 107 to connect central part 106 to wheel center 104.

Lateral reinforcement disc 128 comprises a donut-shaped disc having an at least partially curved shape and central opening 134. Central opening 134 has radius RB2, which is smaller than radius RB1 and which is substantially equal or slightly larger than radius R1, such that first end 110 of wheel center 104 can slidably be provided on first end 110 of wheel center 104.

In this particular example, lateral reinforcement disc 128 comprises first curve 136 that extends outwardly from inner edge 140 of central opening 134 towards central part 126. In other words, first curve 136 is, when viewed from a mounted position of support wheel 102, outwardly directed. First curve 136 comprises a curve having a curve radius C1. The at least partially curved shape of lateral reinforcement disc 28 in this example further comprises curved surface 38 that is positioned radially outwardly from first curve 36 and that is operatively connected to outer edge 136a thereof. Curved surface 138 in this example is a semi-circle that, when viewed along wheel axis A from inner edge 140 of lateral reinforcement disc 128 towards central part 126, has a concave surface. In this example, the at least partially curved shape further comprises second curve 142 that extends outwardly from outer edge 144 of curved surface 138 towards central part 126 of wheel body 106. Second curve 142 in this example has a rounded outer edge that, at its end, is connected to surface S of central part 126. The rounded outer edge obviates sharp edges that may damage the vehicle during mounting of the support wheel on the vehicle. In addition, lateral reinforcement disc 128 in this example comprises transition zone 143, which is connects first curve 136 with curved surface 138. Transition zone 143 extends outwardly and, when viewed along wheel axis A from inner edge 140 towards central part 126, away from central part 126. Transition zone 143 in this example comprises a slight curve to further increase the strength and to provide a solid connection between first curve 136 and curved surface 138.

In this example, lateral reinforcement disc 128 is connected to central part 126 by means of releasable click-connection 146. Click connection 146 comprises click element 148 in lateral reinforcement disc 128 and opening 150 in central part 126 that is configured to matingly receive click element 148 which clicks into place. Lateral reinforcement disc 128 further comprises openings 152 that, when central part 126 and lateral reinforcement disc 128 are connected to each other, are positioned at the same position to form through-holes in wheel body 106.

Rolling surface 108 in this example comprises solid plastic, in particular nylon-containing, tyre 108, which is provided on radial outer end 130 of wheel body 106. The connection between the rolling surface 108 and wheel body 106 is preferably made by gluing, although other methods of connecting, such as hot melting, screwing or bolting may also be used.

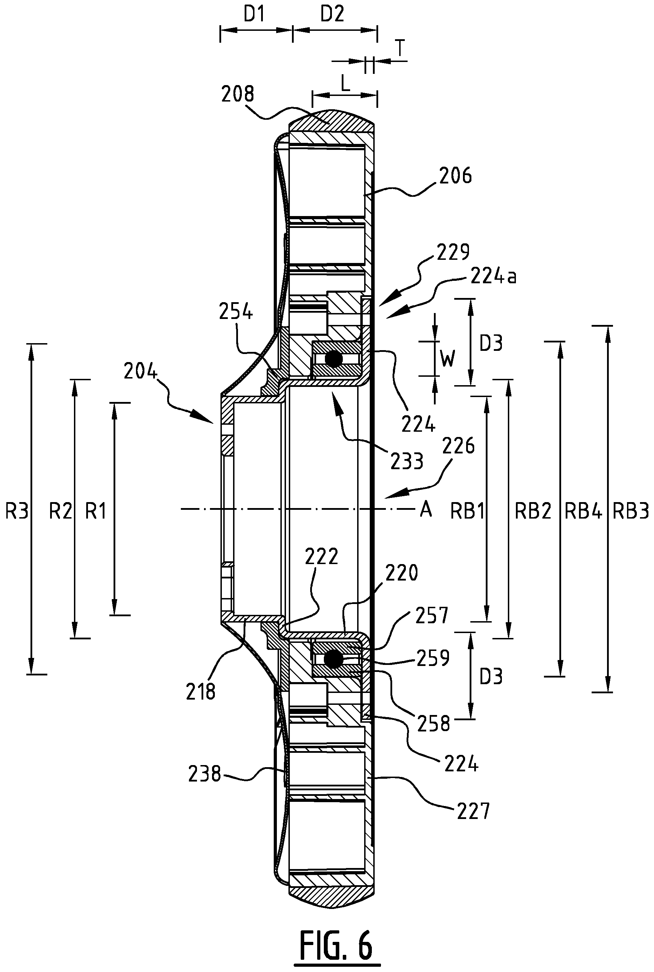

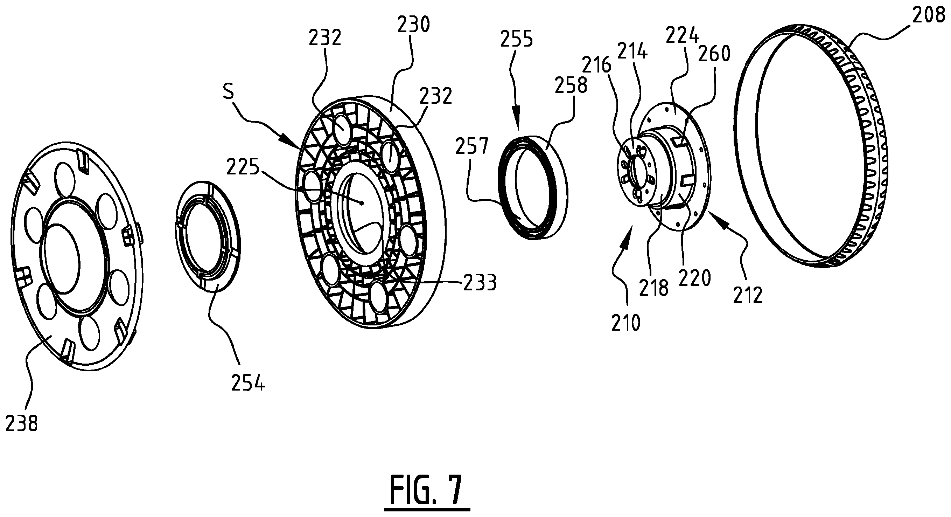

In a third example (see figures 6 and 7), support wheel 202 comprises, viewed from central axis A outwards, wheel center 204, wheel body 206 and rolling surface 208. Wheel center 204 in this example comprises steel wheel center 204 having a (substantially) cylindrical shape that extends over distance D from first end 210 to second end 212. First end 210 is provided with mounting surface 214, which in this example is formed as mounting plate 214 having a plurality of apertures 216 that are configured to receive axle bolts to connect support wheel 202 to an axle of a (not shown) vehicle. Apertures 216 of mounting surface 214 are configured such that they can be used for 4 or 5-lug axles and/or for 6 and 7-lug axles of vehicles. This allows support wheel 202 to be positioned on many different types and makes of vehicles.

In this example, wheel center 204 comprises first part 218 and second part 220. First part 218 extends over length D1 from first end 210 towards second part 220 and is connected thereto. Second part 220 extends over length D2 from (the end of) first part 218 towards second end 212 of wheel center 204. First part 218 has first diameter R1 and second part 220 has second diameter R2, which is larger than first diameter R1, which results in radially outwardly directed edge 222 being formed between first part 218 and second part 220. Wheel center 204 further comprises, at second end 212, flange 224, which extends radially outward from second end 212 over distance D3, which is a difference between second diameter R2 and third diameter R3.

Wheel body 206 in this example comprises central part 226 and lateral reinforcement disc 228. In this example, central part 226 is formed as a donut-shaped part 226 comprising nylon, although it is noted that other materials, including other plastics may also be used to manufacture central part 226. Central part 226 comprises central opening 225 having radius BR2, which is larger than radius R2, such that wheel body 206 can slidably be provided on wheel center 204, in particular on second part 220 of wheel center 204. Central part 226 further comprises circular indentation 233 that extends radially outwardly from central opening 225 over predetermined distance W and that extends from side wall 217 inwardly over predetermined distance L. Circular indentation 233 is configured for receiving bearing 255 that has outer radius BR3 adapted to the radius of circular indentation 233 to provide a snug fit therein. Inner radius BR4 of bearing 255 is substantially equal to radius R2, such that bearing 255 snugly slides over second part 220 of wheel center 204.

Bearing 255 in this example comprises inner bearing ring 257 and outer bearing ring 258, which are connected by means of bearing balls 259. Other suitable bearings can also be used. Inner bearing 257 in this example is provided with grooves (not shown) that extend in axial direction over a predetermined distance and that are configured to mate with projections 260 on second part 220 of wheel center 204 to lock movement of inner bearing 257 relative to wheel center 204. Outer bearing 259 is connected to central part 226 of support wheel 202 to lock against movement of outer bearing 259 relative to central part 226.

Side wall 227 of central part 226, which in use is directed outwardly, is further provided with circular indentation 229 that is shaped to fittingly, preferably snugly, receive flange 224 therein. The depth of indentation 229, when viewed in first direction x along central axis A, is substantially equal to thickness T of flange 224, such that upper surface 224a of flange 224 is flush with side wall 227 of central part 226.

In this example (see figures 6 and 7), support wheel 202 further comprises securing ring 254 that is positioned on wheel center 204 and between central part 226 and lateral reinforcement disc 228 of wheel body 206. More precisely, in this example securing ring 254 rests against edge 222 between first part 218 and second part 220 of wheel center 204. As such, securing ring 254 and flange 224 enclose central part 226 of wheel body therebetween such that rotation of wheel body 206 is still possible, in particular due to bearing 255. This results in wheel body 6 of support wheel 2 being able to rotate even if wheel center 4 is connected to a non-rotating axle of a vehicle, such as an electric vehicle (EV). This allows even vehicles with locked axles to be transported in a rolling manner. Securing ring 54 is connected to first part 218 of wheel center 214.

Lateral reinforcement disc 228 is similar to lateral reinforcement discs 128 and 28 and for a description of lateral reinforcement disc 228 reference is made to the earlier descriptions.

Rolling surface 208 in this example comprises solid plastic, in particular nylon-containing, tyre 208, which is provided on radial outer end 230 of wheel body 206. The connection between the rolling surface 208 and wheel body 206 is preferably made by gluing, although other methods of connecting, such as hot melting, screwing or bolting may also be used.

In an example of method 1000 for transporting a vehicle (see figure 6), the method may comprise the steps of providing 1002 a support wheel according to the invention and removing 1004 a wheel from a vehicle. In this example, the method further comprises the steps of attaching 1006 the support wheel to the axle of the vehicle and transporting 1008 the vehicle using the support wheel.

The present invention is by no means limited to the above described preferred embodiments and/or experiments thereof. The rights sought are defined by the following claims within the scope of which many modifications can be envisaged.

## Claims

1. Support wheel comprising:
- a wheel center comprising a center body that extends coaxial with a central wheel axis over a predetermined length between a first and a second end, wherein the first end is connectable to a wheel axle of a vehicle;
- a wheel body that, when viewed from the wheel axis, extends radially outwardly to a radial outer end, wherein the wheel body comprises a central opening that is configured to at least partially receive the wheel center;
- a rolling surface provided on the radial outer end of the wheel body;
wherein the wheel body comprises a central part and a lateral reinforcement disc that comprises, when viewed radially outwardly from the central wheel axis, an at least partially curved shape.

2. Support wheel according to claim 1, wherein the lateral reinforcement disc comprises a central opening that is delineated by an inner edge, wherein the central opening is configured to accommodate the first end of the wheel center.

3. Support wheel according to claim 2, wherein the at least partially curved shape comprises a first curve that extends outwardly from the inner edge towards the central part.

4. Support wheel according to claim 3, wherein the at least partially curved shape further comprises a curved surface that is positioned radially outwardly from the first curve and is operatively connected to an outer edge thereof, wherein the curved surface is a semi-circle that, when viewed along the wheel axis from the inner edge towards the central part, has a concave surface.

5. Support wheel according to any one of the claims 2 to 4, wherein the first end of the wheel center is flush with the inner edge of the lateral reinforcement disc or extends, when viewed along the central wheel axis, beyond said inner edge.

6. Support wheel according to any one of the preceding claims, wherein the lateral reinforcement disc is positioned on a first side of the wheel that, in use, faces the wheel axle of the vehicle.

7. Support wheel according to any one of the preceding claims, wherein the second end of the wheel center comprises a flange that, when viewed from the central wheel axis, extends radially outward, wherein the flange is configured to be positioned against or at least partially in a second side wall of the wheel body that is positioned opposite the lateral reinforcement disc.

8. Support wheel according to claim 7, wherein the flange is configured to connect the wheel body to the wheel center.

9. Support wheel according to claim 7, further comprising a securing ring that is configured to be provided on the wheel center between the central part and the lateral reinforcement disc of the wheel body, and wherein the central part is rotatably positioned between the flange and the securing ring.

10. Support wheel according to any one of the preceding claims, wherein the wheel body further comprises a bearing that is positioned in the central opening, such that the wheel body is rotatable relative to the wheel center.

11. Support wheel according to any one of the preceding claims, wherein the central part and the lateral reinforcement disc are releasably or fixedly connected to each other.

12. Support wheel according to any one of the preceding claims, wherein the rolling surface is a tyre, preferably a plastic or rubber tyre, more preferably a nylon tyre.

13. Support wheel according to any one of the preceding claims, wherein the support wheel is at least partially made of plastic, and preferably wherein the wheel body comprises plastic.

14. Method for transporting a vehicle, in particular a broken-down vehicle, the method comprising:
- providing a support wheel according to any one of the preceding claims;
- removing a wheel from a vehicle;
- attaching the support wheel to the axle of the vehicle; and
- transporting the vehicle using the support wheel.

15. Method according to claim 14, wherein the support wheel is a support wheel according any one of the claims 10 or 11, and wherein the vehicle is an electric vehicle.
